# EUROPEAN PATENT APPLICATION

(11) **EP 3 693 165 A1**
(43) Date of publication of application: **12.08.2020**
(21) Application number: 20155062.1
(22) Date of filing: 03.02.2020
(51) Int. Cl.: B33Y 10/00, C08J 9/00, C08J 9/12, C08J 9/16

(54) **METHOD FOR GRINDING MATERIALS FOR ADDITIVE MANUFACTURING**

(30) Priority: 05.02.2019 US 201916267826
(71) Applicant: Hexcel Corporation, Stamford, CT 06901 (US)
(72) Inventor: Defelice, Scott, Holyoke, Massachusetts 01040 (US); DECARMINE, Anthony, Lebanon, CT 06249 (US)
(74) Representative: Swea IP Law AB

(57) **Abstract**

A method of preparing a powder matrix suitable for use in laser sintering for printing a three-dimensional object. A foamable polyaryletherketone (PAEK) matrix is provided and is foamed to create voids. The foamed matrix is ground to form PAEK particles having a mean diameter between 10 microns and 200 microns. In some embodiments, the foaming is performed via injection of a blowing agent into PAEK matrix during an extrusion of the PAEK matrix to form the plurality of voids in the PAEK foam.

## Description

### TECHNICAL FIELD

The present disclosure generally relates to additive manufacturing technology and techniques, and more specifically relates to a method for grinding materials for additive manufacturing such as polyaryletherketones ("PAEK") used as a matrix for use in selective laser sintering ("SLS" or "LS").

### BACKGROUND

It is known to use additive manufacturing technology and techniques, together with fine polymer powders, to manufacture high-performance products having applications in various industries (e.g., aerospace, industrial, medical, etc.).

SLS is an additive manufacturing technique that uses electromagnetic radiation from a laser to selectively fuse a powder material typically having an average diameter of 25 to 150 µm into a desired 3-D object. The laser selectively fuses the powder material by scanning cross-sectional layers generated from a 3-D digital description of the desired object onto the top layer of a bed of the powder material. After a cross-sectional layer is scanned, the powder bed is lowered by one-layer thickness in a z-axis direction, a new top layer of powder material is applied to the powder bed, and the powder bed is rescanned. This process is repeated until the object is completed. When completed, the object is formed in a "cake" of unfused powder material. The formed object is extracted from the cake. The powder material from the cake can be recovered, sieved, and used in a subsequent SLS process.

Polyaryletherketones ("PAEK") are of interest in the SLS process because parts that have been manufactured from PAEK powder or PAEK granulates are characterized by a low flammability, a good biocompatibility, and a high resistance against hydrolysis and radiation. The thermal resistance at elevated temperatures as well as the chemical resistance distinguishes PAEK powders from ordinary plastic powders. A PAEK polymer powder may be a powder from the group consisting of polyetheretherketone ("PEEK"), polyetherketone ketone ("PEKK"), polyetherketone ("PEK"), polyetheretherketoneketone ("PEEKK") or polyetherketoneetherketoneketone ("PEKEKK").

PEKK powders are of particular interest in the SLS process because objects that have been manufactured from PEKK powders via SLS have demonstrated the above characterizations in addition to demonstrating superior strength relative to other PAEK materials. Furthermore, PEKK powders are unique in the SLS technique because unused PEKK powder can be recycled in subsequent SLS processes with the addition of refresh material and the resultant pieces exhibit increased strength as compared to similar parts made with virgin powder.

In order to prepare a PAEK for use in the SLS machine the polymer is milled to form a polymer powder in the range, for example, of 10 µm to 200 µm. Different milling techniques can be used to grind the powder. A person of ordinary skill in the art and familiar with this disclosure will understand that the particle size range will vary based on the type of polymer being milled and the specific parameters of the milling process.

As disadvantage of known milling techniques for use in with PAEK polymers is that the material is relatively hard compared with other materials. As a result, the grinding process is time consuming and difficult. In some cases, this disadvantage makes the cost of preparing the SLS powder cost prohibitive as it consumers substantial time and electricity and causes substantial wear on the milling machine. As a result, the per pound cost of ground PAEK powder is increased.

### BRIEF DESCRIPTION OF THE DRAWINGS

FIG. 1 illustrates an LS machine in accordance with one embodiment of the present invention.

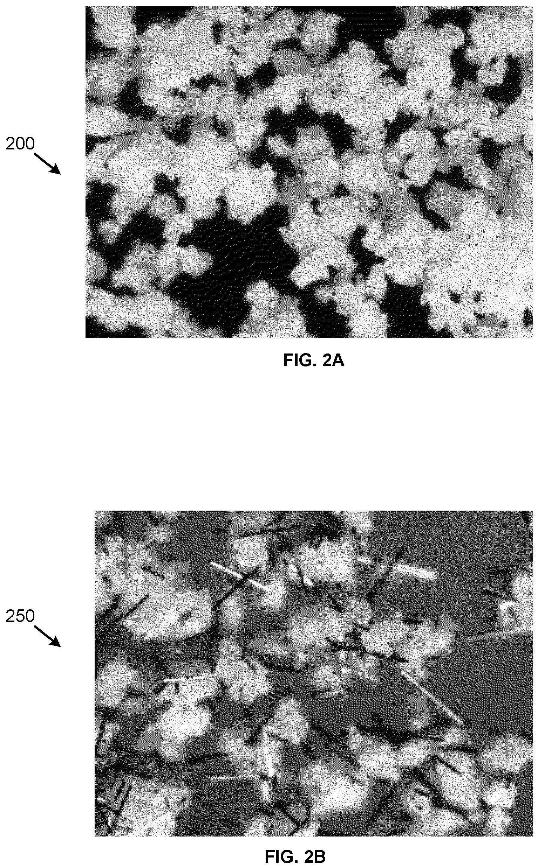

FIG. 2A is an image showing a magnified view of PEKK flake.
FIG. 2B is an image showing a magnified view of a plurality of PEKK particles.
FIG. 3 illustrates a method in accordance with one embodiment of the present invention.

### DETAILED DESCRIPTION

The present disclosure describes aspects of the present invention with reference to the exemplary embodiments illustrated in the drawings; however, aspects of the present invention are not limited to the exemplary embodiments illustrated in the drawings. It will be apparent to those of ordinary skill in the art that aspects of the present invention include many more embodiments. Accordingly, aspects of the present invention are not to be restricted in light of the exemplary embodiments illustrated in the drawings. It will also be apparent to those of ordinary skill in the art that variations and modifications can be made without departing from the true scope of the present disclosure. For example, in some instances, one or more features disclosed in connection with one embodiment can be used alone or in combination with one or more features of one or more other embodiments.

The present invention is especially useful for preparing polymer powders for laser sintering. One such class of polymer powders is Polyaryletherketones ("PAEK") polymers. PAEKs are of interest in the SLS process because parts that have been manufactured from PAEK powder or PAEK granulates are characterized by a low flammability, a good biocompatibility, and a high resistance against hydrolysis and radiation. The thermal resistance at elevated temperatures as well as the chemical resistance distinguishes PAEK powders from ordinary plastic powders. A PAEK polymer powder may be a powder from the group consisting of polyetheretherketone ("PEEK"), polyetherketoneketone ("PEKK"), polyetherketone ("PEK"), polyetheretherketoneketone ("PEEKK") or polyetherketoneetherketoneketone ("PEKEKK").

PEKKs are well-known in the art and can be prepared using any suitable polymerization technique, including the methods described in the following patents, each of which is incorporated herein by reference in its entirety for all purposes: U.S. Pat. Nos. 3,065,205; 3,441,538; 3,442,857; 3,516,966; 4,704,448; 4,816,556; and 6,177,518. PEKK polymers differ from the general class of PAEK polymers in that they often include, as repeating units, two different isomeric forms of ketone-ketone. These repeating units can be represented by the following Formulas I and II:

-A-C(=O)-B-C(=O)- I

-A-C(=O)-D-C(=O)- II

where A is a p,p'-Ph-O-Ph-group, Ph is a phenylene radical, B is p-phenylene, and D is m-phenylene. The Formula I:Formula II isomer ratio, commonly referred to as the T:I ratio, in the PEKK is selected so as to vary the total crystallinity of the polymer. The T:I ratio is commonly varied from 50:50 to 90:10, and in some embodiments 60:40 to 80:20. A higher T:I ratio such as, 80:20, provides a higher degree of crystallinity as compared to a lower T: I ratio, such as 60:40.

The crystal structure, polymorphism and morphology of homopolymers of PEKK have been studied and have been reported in, for example, Cheng, Z. D. et al, "Polymorphism and crystal structure identification in poly(aryl ether ketone ketone)s," Macromol. Chem. Phys. 197, 185-213 (1996), the disclosure of which is hereby incorporated by reference in its entirety. This article studied PEKK homopolymers having all para-phenylene linkages [PEKK(T)], one meta-phenylene linkage [PEKK(I)] or alternating T and I isomers [PEKK(T/I)]. PEKK(T) and PEKK(T/I) show crystalline polymorphism depending upon the crystallization conditions and methods.

In PEKK(T), two crystalline forms, forms I and II, are observed. Form I can be produced when samples are crystallized from melting at low supercoolings, while Form II is typically found via solvent-induced crystallization or by cold-crystallization from the glassy state at relatively high supercooling. PEKK(I) possesses only one crystal unit cell which belongs to the same category as the Form I structure in PEKK(T). The c-axis dimension of the unit cell has been determined as three phenylenes having a zig-zag conformation, with the meta-phenylene lying on the backbone plane. PEKK(T/I) shows crystalline forms I and II (as in the case of PEKK(T)) and also shows, under certain conditions, a form III.

Suitable PEKKs are available from several commercial sources under various brand names. For example, polyetherketoneketones are sold under the brand name OXPEKK® polymers by Oxford Performance Materials, South Windsor, Connecticut. Polyetherketoneketone polymers are also manufactured and supplied by Arkema. In addition to using polymers with a specific T:I ratio, mixtures of polyetherketoneketones may be employed.

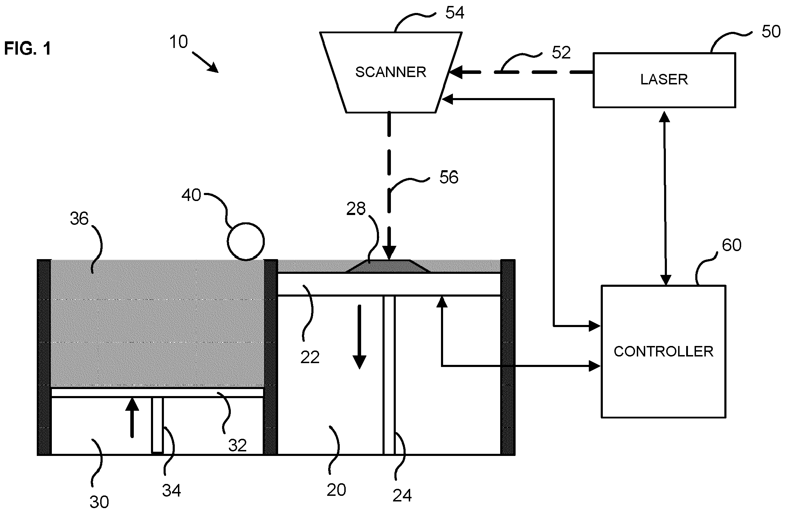

In reference to FIG. 1, an LS system 10 in accordance with the present invention is illustrated. The system 10 includes a first chamber 20 having an actuatable piston 24 deposed therein. A bed 22 is deposed at an end of the piston 24. It should be understood that the term bed may refer to the physical structure supported on the piston or the uppermost layer of powder deposed thereon.

The temperature of the bed 22 can be variably controlled via a controller 60 in communication with heating elements (not shown) in and or around the bed 22. Furthermore, the LS system 10 according to the invention may include a heating device above the bed 22, which preheats a newly applied powder layer up to a working temperature below a temperature at which the solidification of the powder material occurs. The heating device may be a radiative heating device (e.g., one or more radiant heaters) which can introduce heat energy into the newly applied powder layer in a large area by emitting electromagnetic radiation.

A second chamber 30 is adjacent to the first chamber 20. The second chamber 30 includes a table surface 32 disposed on an end of a piston 34 deposed therein. A powder 36 for use in the LS system 10 is stored in the second chamber 30 prior to the sintering step. It will be understood to a person of ordinary skill in the art and familiar with this disclosure that while a specific embodiment of an LS system is disclosed, the present invention is not limited and different known LS systems may be employed in the practice of the present invention.

During operation of the LS system 10, a spreader 40 translates across a top surface of the first chamber 20, evenly distributing a layer of powder 36 across either the top surface of the bed 22, or the material previously deposed on the bed 22. The LS system 10 preheats the powder material 36 deposed on the bed 22 to a temperature proximate to a melting point of the powder. Typically, a layer of powder is spread to have a thickness of 125 µm, however the thickness of the layer of powder can be increased or decreased depending on the specific LS process and within the limits of the LS system.

A laser 50 and a scanning device 54 are deposed above the bed 22. The laser 50 transmits a beam 52 to the scanner 54, which then distributes a laser beam 56 across the layer of powder 36 deposed on the bed 22 in accordance with a build data. The laser selectively fuses powdered material by scanning cross-sections generated from a three-dimensional digital description of the part on the surface of the bed having a layer of the powdered material deposed thereon. The laser 50 and the scanner 54 are in communication with the controller 60. After a cross-section is scanned, the bed 22 is lowered by one-layer thickness (illustrated by the downward arrow), a new layer of powdered material is deposed on the bed 22 via the spreader 40, and the bed 22 is rescanned by the laser. This process is repeated until a build 28 is completed. During this process, the piston 34 in the second chamber is incrementally raised (illustrated by the upward arrow) to ensure that there is a sufficient supply of powder 36.

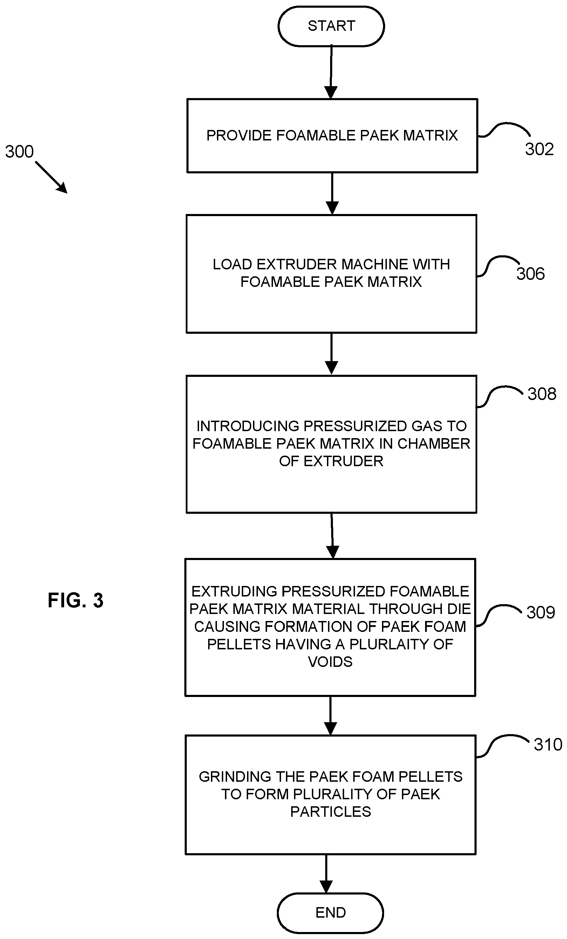

In reference to FIG. 3, a method in accordance with the present invention is shown for pulverizing hard to grind materials. The inventors have discovered that PAEK materials have a tendency to be notch sensitive and that it is possible to reduce the fracture toughness of such materials by introducing flaws in the material. The inventors have further discovered that this behavior can be used to good effect to reduce the requirement for grinding by increasing frangibility by introducing a great number of flaws into an otherwise solid material. The flaws tend to weaken the material and serve to favor the propagation of fractures on grinding forces, thereby favoring the formation of large numbers of small bodies.

In a first embodiment of the present invention a plurality of voids is introduced into the solid PAEK matrix. The method involves foaming the PAEK matrix material to create a controlled size range of embedded bubbles or voids therein. It is known to extrude to raw PAEK matrix material to form pellets prior to grinding. Such extrusion techniques are employed, for example, to add a filler to the matrix such as a carbon fiber. For example, a first amount of a thermoplastic polymeric resin may be compounded with reinforcing particulates such as carbon fiber in an extruder to produce a first extrudate. The extruder may be, for example, a single screw or twin-screw extruder, as is known in the art. The material is subject to a pressurized blowing agent such as CO2 or Freon while the material is in the extruder chamber. The blowing agent infiltrates the material in the extruder chamber under increased pressure. As the material is extruded through the die hole the outside pressure is reduced to atmospheric pressure, causing the pressurized blowing agent to form a plurality of bubbles in the extruded material. In one embodiment of the present invention, the extruded material is in the form of pellets. The foamed pellets are then ground, typically via attrition milling, to form a plurality of particles suitable for SLS. In one embodiment of the present invention, as it relates to SLS of PEKK, the particles are generally between 10 and 200 microns in diameter and have a mean diameter between 50 and 70 microns. A person of skill in the art and familiar with this disclosure will understand the particle size may vary based on the type of matrix material, fillers, and designated additive technique, among other factors.

The foamed pellets are ground using any of a grinding technique known in the art to be useful for grinding. For example, the grinding may be performed in the branch hammer, attrition mill or pin-mounted disc mill. In some embodiments of the present invention, the pellets are ground in a cryogenic milling process in which the pellets are cooled using a cryogenic material such as LN2 to cause the material to become brittle and subject to fracture. The inventors have found that by foaming the PAEK pellets, the grinding time is substantially reduced. As a result, overall cost efficiencies are provided through a reduction in electrical demand, time, and machine wear, thereby creating a more competitive product.

In FIG. 3, one embodiment of the present invention is shown 300. First, a foamable PAEK matrix material is provided, typically from a supplier of the PAEK material 302. The PAEK matrix material is then subjected to an extrusion process to form pellets from the PAEK matrix. The PAEK matrix material is loaded into a hopper 306. During the extrusion process it is possible to add carbon fiber and or another additive to the PAEK material. The extrusion process mixes the fiber with the PAEK matrix prior to extruding the material through a die to form the pellets. In accordance with the present invention, a pressurized gas is introduced into the PAEK matrix material while it is in the extruder chamber 308. As the PAEK matrix material is extruded from the die of the extruder a plurality of voids is formed in the extruded PAEK creating a PAEK foam 309. After the PAEK foam pellets are formed, the PAEK foam is subject to a grinding process to form PAEK particles 310. It has been found that the plurality of voids in the PAEK foam reduce the fracture toughness of the material thereby favoring the formation of a large number of small bodies with significant less grinding as compared PAEK pellets that have not been foamed. In one test starting from non-foamed PEKK pellets and using cryogenic milling, the Applicant was only able to achieve a plurality of PEKK particles have a mean diameter of around 400 microns. With use of the foamed pellets it is possible to obtain PEKK particles having the necessary mean diameter of between 50 and 70 microns required for SLS.

The raw PAEK may be supplied from a toller in the form a PAEK flake. In other embodiments of the present invention, the raw PEKK is provided in the form of pellets that have been previously extruded to allow for handling and shipment. In such cases, the raw PAEK pellet is re-extruded to form the PAEK formed pellets in accordance with the present invention.

In one embodiment of the present invention, a method for foaming the PAEK matrix involves foaming of the matrix material using methods that create a controlled size range of embedded bubbles. There are known methods to manage this using CO2 injection during extrusion. Open or closed cells may be used variously. Such methods are used industrially to reduce the weight of parts or to reduce material consumption or to make a better thermal insulator. A single or twin-screw extruder maybe used in accordance with the present invention.

In addition to PAEK matrix other suitable materials may be used in accordance with the present invention. Suitable materials include thermoplastic polymers which may be amorphous, semicrystalline, or crystalline materials. Typical examples of polymeric materials include styrenic polymers (e.g., polystyrene, ABS), polyolefins (e.g., polyethylene and polypropylene), fluoropolymers, polyamides, polyimides, polyesters, polycarbonate, polyphenylene ether (PPE), thermoplastic elastomers, vinyl halides (e.g., PVC), acrylic (e.g., PMMA), acetal, other high temperature plastics (e.g., PEEK, PEKK, PES, PPS, PEKK, PEI, PPA) and the like. The article may also include any number of other additives known in the art such as reinforcing agents, lubricants, plasticizers, colorants, fillers, stabilizers and the like. Optionally, the articles may include a nucleating agent, such as talc or calcium carbonate. In many embodiments, the articles are free of a nucleating agent. The articles are generally free of residual chemical blowing agents or reaction byproducts of chemical blowing agents. The articles are also generally free of non-atmospheric blowing agents, for example, when the supercritical fluid additive is an atmospheric gas (e.g., nitrogen, carbon dioxide). Such extruders and methods of their operation are known in the art. For example, US Patent No. 7,318,713 to Trexel, Inc. illustrates extrusion systems for foaming a polymer matrix. The disclose of this reference is incorporated by reference.

A person of ordinary skill in the art will appreciate that the structure of the voids in the foamed material will vary from material system to material system and based on the foaming method. A person of ordinary skill in the art should also understand that the formed voids may be referred to as flaws.

The structure of the flaws will vary from materials system to material system and foaming method to foaming method. Generally, however, the features (size of voids and inter-void wall thickness) should have relationship to the desired PSD desired from the end product. This is the fracture debris will be scaled by the features - where the bulk material will tend to cleave. While the flaws made by such a process will tend to be spherical (typically sub-optimal for crack initiation) these spheres will be very small and will contribute much to localized stress concentration.

A person of ordinary skill in the art and familiar with this disclosure will understand how to operate the pressurized extruder to provide a desired consistent pattern of a plurality of voids. In one embodiment of the present invention 60/40 PEKK in pellet form is provided and introduced into an extruder. In the extruder the PEKK matrix material is subjected to pressurized gas and extruder from the die to from a plurality of voids in the extruded PEKK. In one embodiment, the voids have a mean diameter of between 60 and 70 microns. The wall thickness between the voids is on average between 60 and 70 microns. The foamed pellets are ground via an attrition mill to form a powder have a mean particle size of between 60 and 70 microns. A person of ordinary skill in the art will understand that although a specific example is provided, the present invention is not limited in this regard and different configurations may be employed to reduce the hardness of the target materials.

The structure of the flaws will vary from materials system to material system and foaming method to foaming method. Generally, however, the features (size of voids and inter-void wall thickness) should have relationship to the desired PSD desired from the end product. This as the fracture debris will be scaled by the features - where the bulk material will tend to cleave. While the flaws made by such a process will tend to be spherical (typically sub-optimal for crack initiation) these spheres will be very small and will contribute much to localized stress concentration. he geometry of the resulting powder will be driven also by the complement of the spheres, netting some fraction of surface topography of concave semi-spherical features.

In some embodiments of the present invention, intentional inclusions (i.e., fillers) may also provide additional locations for crack initiation - the combination of additives and foaming may provide synergy. Intentional exclusions (i.e., selective leaching) may provide similarly synergistic effects by creating intermolecular voids too small for a conventional foaming process.

In yet further embodiments of the present invention, the plurality of voids in the polymer extrudate may be formed by inclusion of a chemical agent in the pellets, such as a nucleating agent. The nucleating agent may, for example, be combined with the matrix during the extrusion process. Subsequently, the nucleating agent may be activated by heat or microwave or some other process thereby releasing a gas into the matrix and forming a plurality of voids therein. A person of ordinary skill in the art and familiar with this disclosure will understand that different nucleating agents are available and may be used in accordance with the present invention to effect the formation in the matrixing material subsequent to extrusion and prior to pulverization.

In yet other embodiments of the present invention, the matrix can be foamed after the extrusion process. For example, the extruded pellets may be impinged with a gas such as carbon dioxide or Freon under critical or sub-critical. As the pressure is reduced at a controlled rate foam or a plurality of voids is formed in the matrix material, thereby foaming the pellets prior to pulverization. A person of ordinary skill in the art and familiar with this disclosure will understand that different post-extrusion methods may be used to foam the matrix material prior to pulverization.

## Claims

1. A method of preparing a powder matrix suitable for use in laser sintering for printing a three-dimensional object, the method including the steps of:
providing a foamable polyaryletherketone (PAEK) matrix;
foaming the PAEK matrix to form a PAEK foam, the PAEK foam having a plurality voids;
grinding the PAEK foam to form a PAEK powder comprising plurality of PAEK particles having a mean diameter between 10 microns and 200 microns.

2. The method of claim 1 wherein the step of foaming the matrix material to form a PAEK foam comprises the step of injecting a blowing agent into PAEK matrix during an extrusion of the PAEK matrix to form the plurality of voids in the PAEK foam.

3. The method of claim 1 the step of foaming the matrix material to form a PAEK foam comprises the step of injecting a blowing agent into PAEK matrix after an extrusion of the PAEK matrix to form the plurality of voids in the PAEK foam.

4. The method of claim 2 or 3 wherein the blowing agent comprises one or more of CO2 and Freon.

5. The method of claim 4 wherein the step of grinding comprises one or more of attrition milling.

6. The method of claim 5 wherein the step of attrition milling comprises attrition milling the PAEK foam under cryogenic conditions.

7. The method of claim 6 wherein an average wall size in the PAEK foam has a thickness between 10 microns and 200 microns.

8. The method of claim 6 wherein the foaming step is performed to create an average wall size that corresponds to the desired mean particle diameter.

9. The method of claim 1 wherein the step of foaming the matrix material to form a PAEK foam comprises the step of injecting a chemical agent into PAEK matrix during an extrusion of the PAEK matrix.

10. The method of claim 5 wherein the PAEK matrix comprises a polyetherketoneketone (PEKK) matrix.

11. The method of claim 10 wherein the PEKK matrix comprises carbon fibers.

12. The method of claim 1, wherein the step of foaming the matrix material to form a PAEK foam comprises the steps of:
introducing the PAEK matrix into a polymer processing space of an extruder having a screw being rotatable to convey PAEK in the polymer processing space in a downstream direction to an extruder outlet within the polymer processing space;
introducing a blowing agent into the polymer processing space so that the blowing agent is introduced into the PAEK matrix;
extruding pellets from the PAEK matrix via an extrusion outlet in the polymer processing space so that the blowing agent introduced in the PAEK matrix expands to form the plurality of voids.
